# FASCICULE DE BREVET EUROPEEN

(11) **EP 0 691 096 B1**
(45) Date de publication et mention de la délivrance du brevet: **26.02.1997**
(21) Numéro de dépôt: 95420187.7
(22) Date de dépôt: 05.07.1995
(51) Int. Cl.: A47J 27/08, A47J 27/09

(54) **Dispositif de verrouillage/déverrouillage à machoires d'un couvercle sur une cuve**
Klauenverriegelungs/-entriegelungsvorrichtung eines Deckels auf einem Geschirr
A locking/unlocking device with clamps for a lid on a vessel

(30) Priorité: 06.07.1994 FR 9408584
(43) Date de publication de la demande: 10.01.1996
(73) Titulaire: SEB S.A., F-69130 Ecully (FR)
(72) Inventeur: Cartigny, Michel, F-21310 Mirebeau (FR); Chameroy, Eric, F-21260 Veronnes (FR)

(56) Documents cités:
- EP-A- 0 139 772
- EP-A- 0 491 324
- WO-A-92/03080
- DE-A- 3 327 439

## Description

La présente invention se rapporte au domaine technique général des dispositifs de verrouillage/déverrouillage d'un couvercle sur une cuve pour former un récipient de cuisson, de préférence sous pression.

La présente invention concerne un dispositif de verrouillage/déverrouillage d'un couvercle sur une cuve pour former un récipient de cuisson, de préférence sous pression comportant au moins deux mâchoires montées radialement mobiles en opposition sur le couvercle entre une position de verrouillage du couvercle et une position de déverrouillage ainsi qu'un moyen de commande du mouvement des mâchoires de manière à leur faire assurer l'une ou l'autre des positions fixes de verrouillage ou déverrouillage. Un tel dispositif (voir le préambule de la revendication 1) est connu du document EP-A-139772.

On connaît déjà, d'après la demande de brevet WO-92/03080 un récipient de cuisson sous pression mettant en oeuvre un dispositif de verrouillage/déverrouillage comportant des mâchoires montées mobiles radialement dans le couvercle. Les mâchoires, au nombre de deux, sont diamétralement opposées par rapport à l'axe longitudinal du récipient et aptes à venir enserrer dans leur position de fermeture le bord périphérique de la cuve pour fermer hermétiquement le récipient. Inversement, les mâchoires peuvent occuper une position de déverrouillage permettant l'ouverture du récipient. La commande du déplacement des mâchoires est assurée par un moyen de commande, à savoir un bouton monté mobile axialement sur le couvercle dans une position centrale. Le moyen de commande est pourvu de surfaces d'engagement spécialement conformées pour agir lors du déplacement du bouton de commande, sur des surfaces inclinées solidaires des mâchoires afin de les déplacer radialement. Un tel système de commande transforme donc de manière classique, un mouvement axial en un mouvement radial de déplacement des mâchoires entre une position de fermeture et d'ouverture.

Il peut être considéré qu'un tel dispositif apporte une contribution positive à l'amélioration des systèmes de verrouillage en position de fermeture des récipients de cuisson sous pression, notamment en ne nécessitant pas un positionnement relatif précis, tel qu'une indexation, entre le couvercle et la cuve. En revanche, un tel système s'avère mettre en oeuvre une série de pièces mobiles relativement, et en particulier radialement, pour assurer la commande de détachement des mâchoires. Les agencements proposés impliquent des combinaisons de mouvements complexes, telles que des translations et des rotations, provoquant des risques de grippage importants et conduisant à des coûts de fabrication élevés et à une fiabilité de fonctionnement non optimale.

Il y a également lieu de noter que la mécanique de commande proposée ainsi que les déplacements relatifs des pièces nécessitent de la part de l'utilisateur un effort de commande relativement important.

De surcroît le dispositif de l'art antérieur ne comporte pas un système permettant de s'assurer que les mâchoires sont en position parfaite de verrouillage, ni par conséquent de détecter que le récipient est correctement fermé. Il peut en effet s'avérer que pour des raisons de blocage partiel ou de déplacement défectueux des mâchoires ou des pièces assurant leur mouvement, les mâchoires n'assurent qu'un verrouillage partiel, du couvercle sur la cuve. S'agissant de récipient sous pression, la détection d'une fermeture complète et correcte des mâchoires est donc d'une importance capitale pour la sécurité de l'utilisateur.

L'objet de la présente invention vise en conséquence à porter remède aux divers inconvénients énumérés précédemment, et à proposer un nouveau dispositif de verrouillage/ déverrouillage d'un récipient de cuisson permettant de s'assurer de manière simple et fiable, de la bonne position des mâchoires et de la fermeture complète et sûre du couvercle sur la cuve.

Un autre objet de l'invention vise à fournir un nouveau dispositif de verrouillage/déverrouillage dont le déplacement des mâchoires est particulièrement facilité tout en étant robuste et simple.

Un autre objet de l'invention vise à proposer un nouveau dispositif de verrouillage/déverrouillage dont la rigidité globale et le montage sont améliorés.

Un autre objet de l'invention vise à fournir un nouveau dispositif de verrouillage/déverrouillage dans lequel les mâchoires sont ramenées en permanence en position de verrouillage.

Les objets assignés à l'invention sont atteints à l'aide d'un dispositif de verrouillage/déverrouillage d'un couvercle sur une cuve pour former un récipient de cuisson sous pression comportant:
- au moins deux mâchoires montées radialement mobiles en opposition sur le couvercle, entre une position de verrouillage du couvercle sur la cuve et une position de déverrouillage,
- un moyen de commande du mouvement des mâchoires de façon à leur faire assurer l'une ou l'autre de leur position de verrouillage ou déverrouillage,
- des éléments entraîneurs reliés à chaque mâchoire, formés par des bras entraîneurs solidaires de chaque mâchoire au moins, l'un des bras étant pourvu d'une lumière de verrouillage,
- au moins une soupape de verrouillage montée sur le couvercle et apte à occuper sous l'effet de la pression régnant dans le récipient, une position haute et une position basse, la ou les soupapes et la ou les lumières étant disposées relativement pour qu'en position de verrouillage des mâchoires, la ou les soupapes, puisse(nt) engager la ou les lumières en position haute pour verrouiller les mâchoires en position de verrouillage caractérisé en ce qu'il comporte une soupape de verrouillage associée à deux bras entraîneurs, susceptibles d'être superposés au moins en position de verrouillage des mâchoires et comportant chacun une lumière de verrouillage disposées pour coïncider en position de verrouillage.

Des caractéristiques préférentielles sont contenues dans les revendications dépendentés 2-24.

D'autres particularités et avantages de l'invention apparaîtront et ressortiront plus en détail à la lecture de la description faite ci-après, en référence aux dessins annexés, donnés à titre d'exemples illustratifs et non limitatifs dans lesquels:
- La figure 1 montre, selon une vue générale en coupe transversale, la partie supérieure d'un récipient de cuisson pourvu du dispositif de verrouillage/ déverrouillage conforme à l'invention.
- La figure 2 montre, selon une vue de dessus, un récipient de cuisson pourvu du dispositif de verrouillage/déverrouillage selon l'invention, dans lequel les mâchoires sont en position de verrouillage.
- La figure 3 montre, selon une vue de dessus identique à celle de la figure 2, les mâchoires du dispositif de verrouillage/déverrouillage conforme à l'invention en position de déverrouillage.
- La figure 4 montre, selon une coupe transversale partielle agrandie, un détail de réalisation du dispositif de verrouillage/déverrouillage conforme à l'invention en position de verrouillage.
- La figure 5 montre, selon une vue analogue à celle de la figure 4, une vue partielle en coupe du dispositif de verrouillage/déverrouillage conforme à l'invention en position de déverrouillage.
- La figure 6 montre, selon une vue en coupe partielle, un détail du moyen de commande du dispositif conforme à l'invention.
- Les figures 7 et 8 montrent des variantes de réalisation de l'invention.

Le dispositif de verrouillage/déverrouillage conforme à l'invention est destiné à assurer la fermeture par verrouillage d'un couvercle 1 sur une cuve 2 de manière à former un récipient de cuisson, de préférence sous pression tel qu'un autocuiseur. Le récipient est par exemple constitué d'une cuve de forme sensiblement cylindrique, d'axe de révolution x-x', sur laquelle le couvercle 1 est destiné à être rapporté de manière étanche, par exemple par l'intermédiaire d'un joint d'étanchéité à lèvres 3.

La cuve 2 est de manière classique réalisée à partir d'un matériau métallique tel que de l'inox et pourvu d'un fond thermoconducteur solidaire de la cuve 2, par exemple par frappe à chaud. La cuve comporte égaiement des organes de préhension tels que des poignées 5 fixées sur les parois de la cuve 2 par l'intermédiaire de pattes d'attaches 6 et de vis 7.

Le couvercle 1 comporte un disque de fermeture 8 profilé, pourvu à sa périphérie d'une zone en forme de gorge 9 servant de siège de réception du joint d'étanchéité à lèvres 3, et assumant avec ce dernier l'étanchéité de la fermeture du couvercle 1.

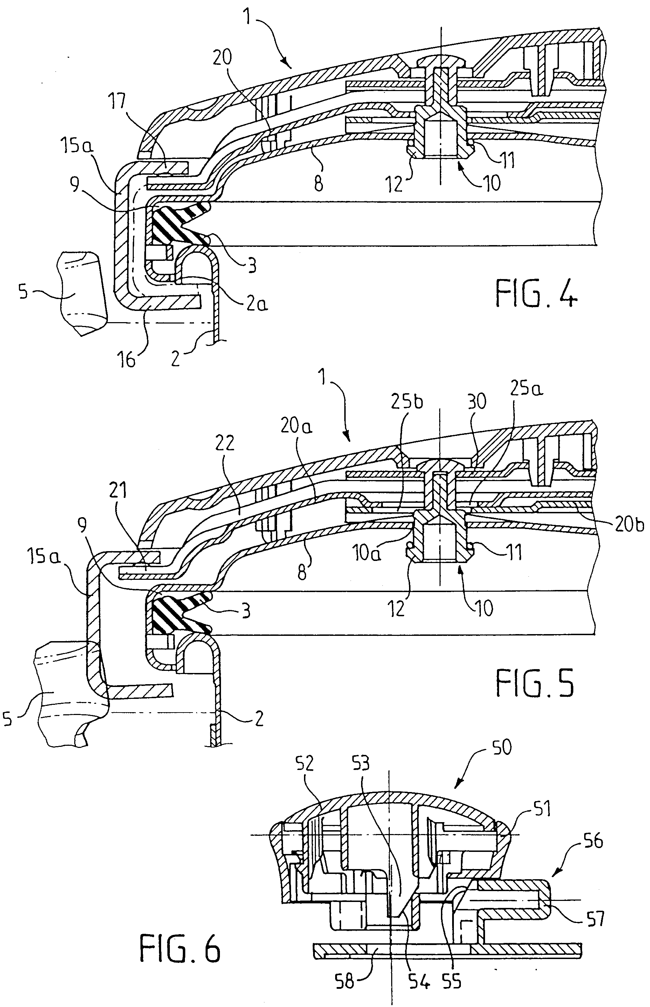

Le disque de fermeture 8 est pourvu d'au moins un perçage 10a permettant le passage et le montage d'une soupape de verrouillage 10 montée à coulissement libre axial dans ledit perçage entre une position basse de butée (telle que montrée à la figure 5 par exemple), et une position haute de butée (telle que montrée à la figure 4 par exemple). La soupape de verrouillage 10 peut être constituée tel que cela est bien connu dans l'art antérieur d'un doigt de sécurité dont la fonction principale est de fournir une information visuelle de la pression régnant dans le récipient sous pression. Avantageusement l'étanchéité à la vapeur, entre la soupape de verrouillage 10 et le perçage 10a est améliorée par interposition d'un joint 11, ce dernier étant maintenu en position par appui sur une collerette 12 formant la partie radiale externe inférieure de la soupape de verrouillage 10.

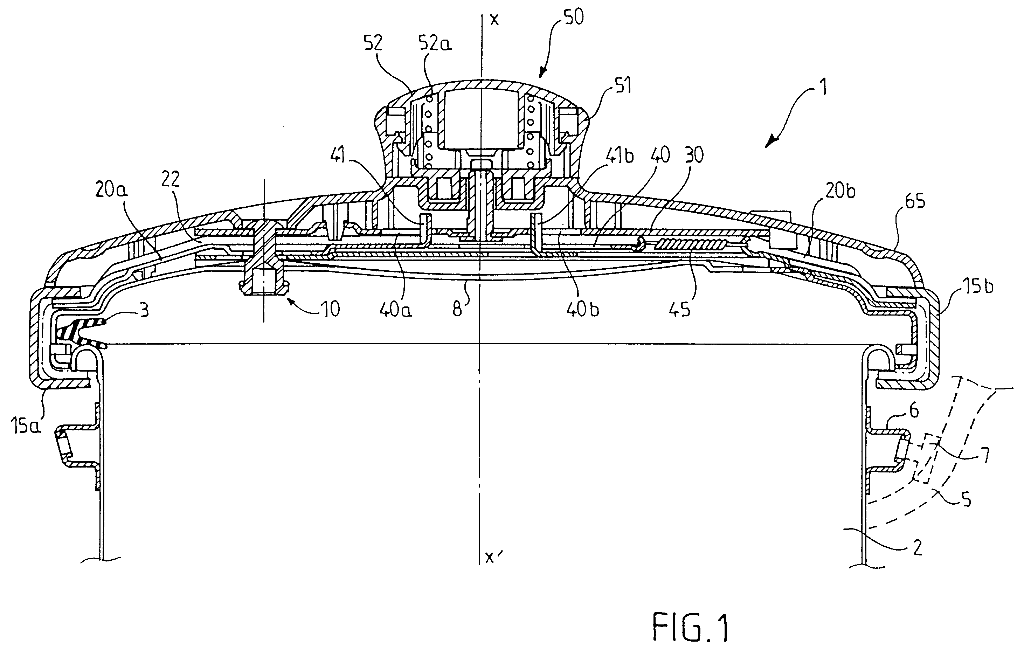

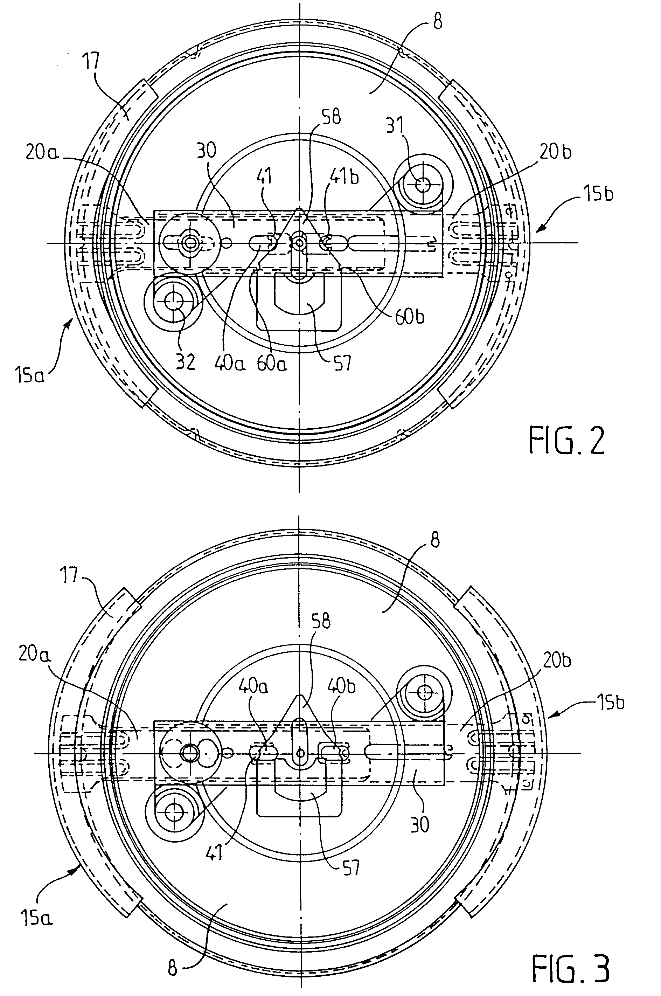

Le couvercle 1 comporte également au moins deux mâchoires 15a, 15b, montées radialement mobiles sur le disque de fermeture 8 entre une position de verrouillage du couvercle 1 sur la cuve 2 (figures 2 et 4) et une position de déverrouillage (figures 3 et 5). Les mâchoires 15a, 15b, se présentent de manière classique sous la forme de segments de profils en U adaptés à la forme du récipient, et dans le cas montré aux figures, sous la forme d'arcs de cercles de longueur déterminée. Chaque mâchoire 15 comporte un rebord inférieur 16 et un rebord supérieur 17 permettant d'enserrer respectivement le rebord périphérique 2a de la cuve 2 et la limite supérieure de la gorge 9. Chaque mâchoire 15a, 15b, est montée mobile sur le couvercle par l'intermédiaire d'éléments entraîneurs incluant des bras entraîneurs associés 20a, 20b, diamétralement opposés et solidaires par une extrémité 21, par exemple par soudage, du rebord supérieur 17. Dans la version préférentielle de l'invention montrée aux figures 1 à 5, chaque bras entraîneur 20a, 20b, se présente sous la forme d'un profilé métallique par exemple rectiligne, de profil adapté à celui du disque de fermeture 8 et de section transversale en U, dont l'âme est tournée vers l'extérieur du récipient et dont les ailes 22 s'étendent également vers l'extérieur du récipient.

Selon une version préférentielle de l'invention, les bras entraîneurs 20a, 20b, présentent une longueur suffisante de manière à pouvoir être superposés, au moins en partie, lors de leur déplacement radial. Les bras entraîneurs 20a, 20b sont en particulier susceptibles d'être superposés au moins en position de verrouillage des mâchoires. Selon cette variante les bras entraîneurs 20a, 20b, sont avantageusement autoguidés radialement l'un dans l'autre, le bras 20a formant le bras mâle et le 20b formant le bras femelle, le bras mâle coulissant dans le bras femelle. Le guidage relatif des bras 20a, 20b, est obtenu par coopération et frottement des ailes 22 de chacun des bras 20a, 20b. Un tel montage permet bien évidemment de réduire les risques de déformation possible lors du coulissement radial de chacun des bras 20a, 20b, et de maîtriser parfaitement le déplacement linéaire de chaque mâchoire 15a, 15b.

Selon cette version préférentielle de l'invention, chaque bras entraîneur, 20a, 20b, est pourvu d'une lumière de verrouillage 25a, 25b, ménagée à travers l'âme de chaque bras. La position de chaque lumière 25a, 25b est déterminée en fonction de la longueur de chaque bras 20a, 20b pour que les lumières 25a, 25b soient en position d'alignement lorsque les mâchoires 15a, 15b, sont en position de verrouillage. Simultanément la position des lumières 25a, 25b, ainsi que la position du perçage 10a, et donc de la soupape 10, est choisie pour que lorsque les mâchoires 15a et 15b sont en position de verrouillage, les lumières 25a, 25b, ainsi que le perçage 10a soient alignés. Cette disposition permet à la soupape de verrouillage 10 d'occuper la position déterminée correspondant à la pression régnant dans le récipient, et en particulier d'occuper sa position haute (figure 4) dans laquelle la soupape 10 s'engage chacune des lumières 25a, 25b, pour verrouiller les mâchoires dans leur position de verrouillage. Une telle position n'est bien évidemment acquise que lorsque les mâchoires 15a,15b, occupent avec précision leur position de verrouillage qui seule permet le passage de la soupape 10 simultanément dans les lumières 25a, 25b. Dans le cas où l'alignement des lumières 25a, 25b n'est pas obtenu lors de la tentative de fermeture, la soupape de verrouillage 10 ne peut monter ce qui génère une fuite de vapeur hors du récipient empêchant toute montée en pression.

Avantageusement, le guidage du mouvement linéaire et radial des bras entraîneurs 20a, 20b, est assuré par des moyens de guidage supplémentaires qui sont solidaires du couvercle 1.

Selon une variante préférentielle de l'invention, les moyens de guidage sont formés par une pièce de support 30 qui enserre les bras entraîneurs 20a, 20b, sur la majeure partie de leur longueur.

Selon une version préférentielle de l'invention, la pièce support 30 est formée d'une plaque de section transversale en U enserrant et recouvrant les bras entraîneurs 20a, 20b, la face interne de l'âme du U étant tournée vers le disque de fermeture 8. La plaque support 30 est avantageusement solidaire du disque de fermeture 8 par l'intermédiaire de deux points d'ancrage 31, 32, situés de part et d'autre de l'axe longitudinal de la plaque support 30. Les points d'ancrage 31, 32, peuvent être constitués de moyens de fixations tels que des vis, ou au contraire également servir de siège pour le passage de moyens de régulation de la pression.

A titre de variante il est également possible de monter la plaque de support 30 de manière inversée, la face interne de la plaque support 30 étant tournée vers l'extérieur du récipient, les bras 20a, 20b, coulissant l'un dans l'autre ainsi que dans ladite plaque support. Dans cette position, la plaque support 30 enserre et supporte les bras 20a, 20b.

Selon une autre variante de réalisation, les moyens de guidage peuvent être constitués de rampes ou de moyens équivalents, solidaires ou partie intégrante du disque de fermeture 8.
Dans tous les cas, et en particulier dans le cas où une plaque support 30, présentant un profil en U est utilisée, les moyens de guidage assument, outre une fonction d'aide supplémentaire au coulissement linéaire des bras entraîneurs 20a, 20b, une fonction complémentaire de rigidification de l'ensemble mécanique assurant le déplacement radial des mâchoires 15a,15b.

La course de déplacement des bras entraîneurs 20a, 20b, entre chacune de leur position limite, correspondant à la position d'ouverture et de fermeture des mâchoires 15a, 15b, est limitée par l'intermédiaire d'une fente 40, ménagée de préférence dans le bras mâle 20a, dans laquelle peut se déplacer un ergot 41 solidaire du bras femelle 20b. La course de déplacement des bras 20a, 20b, est ainsi limitée par la mise en butée de l'ergot 41 contre l'une ou l'autre des deux extrémités de la fente 40.

Selon un mode de réalisation particulier la plaque support 30 comporte une ouverture alignée avec les lumières 25a, 25b, ainsi qu'avec le perçage 10a, permettant le montage en suspension de la soupape de verrouillage 10 (figure 5), par sa partie supérieure de section réduite par rapport à la partie inférieure de la soupape de verrouillage 10. Un tel montage permet le coulissement relatif des bras entraîneurs 20a, 20b, lorsque la soupape de verrouillage 10 est dans sa position basse, ce qui assure simultanément le libre déplacement des mâchoires 15a, 15b.

Avantageusement les bras entraîneurs 20a, 20b, sont ramenés en permanence en position de verrouillage par un moyen de rappel élastique constitué par exemple d'un ressort 45 interposé entre deux jambages respectivement solidaires de chacun des bras entraîneurs 20a, 20b.

Le dispositif de verrouillage/déverrouillage conforme à l'invention comporte également un moyen de commande 50 du mouvement des mâchoires 15a, 15b, permettant d'amener chaque mâchoire dans l'une ou l'autre de leur position fixe de verrouillage/déverrouillage.

Selon une version préférentielle de l'invention telle que montrée aux figures 4 et 6, le moyen de commande 50 forme l'organe de préhension du couvercle 1 et est constitué d'un organe de commande 56 monté mobile selon une direction sensiblement radiale sur le couvercle 1 et couplé cinématiquement avec un bouton de commande 52 monté mobile sur le couvercle 1 selon une direction sensiblement axiale.

Le moyen de commande 50 est constitué d'un pommeau 51 solidaire du couvercle 1, et du bouton de commande 52 monté mobile axialement et élastiquement par un ressort de rappel 52a dans le pommeau 52. Le ressort de rappel 52a maintient le bouton de commande 52 dans la position haute montrée aux figures 4 et 6. Le bouton de commande 52 comporte à sa partie inférieure un doigt d'actionnement 53 pourvu d'une surface d'engagement inclinée 54 destinée à venir engager lors de l'enfoncement du bouton de commande 52 une surface d'engagement complémentaire 55 ménagée sur l'organe de commande 56. L'organe de commande 56 est monté sur le couvercle 1 selon une course déterminée de manière à être amené, lors de son déplacement entre les deux limites définissant sa course, à engager les bras entraîneurs 20a, 20b de façon à commander leur déplacement radial.

Selon une version préférentielle de l'invention l'organe de commande 56 assure le déplacement radial des bras entraîneurs 20a, 20b, de manière active dans le sens radial externe c'est-à-dire dans un sens correspondant à l'écartement progressif des mâchoires 15a, 15b pour atteindre leur position extrême de déverrouillage. Selon cette version préférentielle de l'invention, l'organe de commande 56 est couplé cinématiquement avec le bouton de commande 52 dont le déplacement selon la direction sensiblement axiale définie précédemment, commande le déplacement des bras entraîneurs 20a, 20b, dans le sens radial interne, c'est-à-dire dans un sens de déplacement des mâchoires en direction de leur position de verrouillage. A cette fin l'organe de commande 56 est formé par un poussoir monté sous le pommeau 51. Le poussoir 56 présente une zone de commande 57 surélevée et accessible manuellement par l'utilisateur, ainsi qu'une zone triangulaire 58 d'actionnement plane apte à venir engager des moyens d'actionnement solidaires des bras entraîneurs 20a, 20b.

Selon une variante préférentielle de l'invention, les moyens d'actionnement sont constitués par l'ergot 41 et par un ergot 41 b homologue, solidaire du bras entraîneur 20b. Le déplacement de la zone triangulaire 58 selon une direction radiale à double sens permet ainsi de déplacer également radialement les ergots 41, 41 b mais selon une direction orientée à 90° par rapport à la direction de déplacement du poussoir 56. Par le biais de la zone triangulaire 58, le poussoir 56 engage par conséquent de manière active les bras entraîneurs 20a, 20b et assure progressivement leur écartement lorsque l'utilisateur appuie sur la zone de commande 57. Lorsque les moyens de guidage sont formés par une plaque support 30 recouvrant les bras entraîneurs 20a, 20b, la plaque support 30 comporte deux ouvertures 40a, 40b, ménagées dans l'âme de ladite plaque, et destinées au passage, respectivement des ergots 41, 41b, pour permettre leur déplacement radial. Les ouvertures 40a, 40b ont pour fonction secondaire de limiter la course de déplacement individuel de chaque bras 20a, 20b en servant de butée aux ergots 41, 41b, évitant ainsi le désengagement des mâchoires 15a, 15b hors du couvercle 1.

Avantageusement, la zone d'actionnement triangulaire 58 comporte deux évidements 60a, 60b, par exemple semi-circulaires et dans tous les cas de forme complémentaire à celle des ergots 41, 41b, de manière à déterminer une position stable et fixe d'ouverture des mâchoires correspondant à un blocage en position desdits ergots dans les évidements correspondants 60.

Lors de l'enfoncement du bouton de commande 52 le doigt d'actionnement 53, lorsque les mâchoires 15a, 15b sont en position de déverrouillage, vient engager la surface d'engagement complémentaire 55 pour commander le désarmement du poussoir 56. Le désarmement correspond à une sortie des ergots 41, 41b hors des évidements 60a, 60b, le doigt d'actionnement 53 formant ainsi des moyens de relâchement alors que les évidements 60 forment des moyens de blocage.

Selon la version préférentielle de l'invention montrée aux figures 1 à 4, l'organe de commande 56 et le bouton de commande 52 sont montés sur le couvercle en position centrale pour former un ensemble de préhension du couvercle.

A titre de variante il est bien évidemment possible de dissocier l'ensemble de préhension du couvercle, de l'organe de commande 56 et du bouton de commande 52.

A titre de variante complémentaire il est bien évidemment également possible, sans sortir du cadre de l'invention, de réaliser un dispositif de commande comportant un seul organe de commande 56 capable d'assurer à lui seul la commande dans les deux sens du déplacement radial des bras entraîneurs 20a, 20b. Selon cette variante l'organe de commande 56 assure le déplacement des bras entraîneurs 20a, 20b de manière active dans le sens radial externe et dans le sens radial interne défini précédemment. L'organe de commande 56 est alors constitué d'un simple bouton poussoir dont le profil permet à l'utilisateur par simple poussée ou tirage d'assurer l'écartement ou la rétraction des mâchoires 15a, 15b.

Le couvercle 1 peut compter une plaque d'habillage 65 recouvrant l'ensemble du mécanisme, ladite plaque étant prise en sandwich entre la plaque support 30 et le pommeau 51.

Le fonctionnement du dispositif verrouillage/ déverrouillage conforme à l'invention est le suivant.

La mise en place du couvercle 1 sur la cuve 2 nécessite l'ouverture des mâchoires 15a, 15b, et l'actionnement radial du poussoir 56 ce qui permet de faire coulisser la zone d'actionnement triangulaire 58 qui vient progressivement engager par ses flancs les ergots 41, 41b (figure 2). Le déplacement progressif du poussoir 56 permet d'écarter progressivement les éléments entraîneurs et en particulier les bras entraîneurs 20a, 20b, et simultanément les mâchoires 15a, 15b. La translation du poussoir 56 selon une direction radiale permet donc la translation des deux mâchoires 15a, 15b. La fin de la translation est déterminée par le positionnement de chaque ergot 41, 41b, dans les évidements associés 60a, 60b (figure 3). Au delà de cette translation la position limite des mâchoires 15a, 15b est également déterminée par la mise en butée de l'ergot 41 contre l'extrémité de la fente 40. Dans la position ainsi atteinte, les mâchoires 15a, 15b, sont en position stable de déverrouillage et permettent ainsi un centrage du couvercle 1 sur le bord de la cuve 2 (figure 5).

La fermeture du récipient, c'est-à-dire l'atteinte par les mâchoires 15a, 15b, de leur position de verrouillage, est obtenue par pression de la paume de la main sur le bouton de pommeau 52 qui est par conséquent actionné axialement. Son enfoncement dans le pommeau 51 provoque l'engagement de la surface d'engagement 54 avec sa surface complémentaire 55 ménagée sur le bouton poussoir 56, lequel va progressivement reculer selon une direction radiale externe. Au cours de cette translation en sens inverse, les ergots 41, 41b, sont tout d'abord libérés des évidements 60a, 60b, les mâchoires 15a, 15b, étant ensuite progressivement rappelées l'une vers l'autre vers leur position de verrouillage (figures 2 et 4). Le rappel vers cette position de verrouillage est obtenu par l'action de rappel du ressort 45 permettant le positionnement de chaque mâchoire 15a, 15b, entre le couvercle 1 et sous le rebord 2a de la cuve 2.

Le récipient étant ainsi fermé de manière étanche, la pression peut désormais monter et provoquer le passage de la soupape de verrouillage 10 dans sa position haute à travers les lumières 25a, 25b, lesquelles en position de fermeture complète des mâchoires 15a, 15b, sont coaxiales. L'engagement de la soupape de verrouillage 10 à travers les lumières 25a, 25b (figure 4) permet de verrouiller en position chacun des bras entraîneurs 20a, 20b, et simultanément chaque mâchoire correspondante.

Le dispositif de verrouillage/déverrouillage conforme à l'invention permet ainsi d'assurer une montée en pression en toute sécurité puisque le passage de la soupape de verrouillage dans les lumières de verrouillage 25a, 25b, ne peut intervenir que si les bras entraîneurs 20a, 20b, et donc les mâchoires 15a, 15b, sont en position de verrouillage parfaite. La soupape de verrouillage 10 s'oppose par ailleurs à tout déplacement radial des mâchoires 15a, 15b. Le déplacement radial et linéaire des bras entraîneurs 20a, 20b, est par ailleurs obtenu sans risque de déformation en raison de la présence d'une succession de moyens de guidage formés par le coulissement des bras intérieurs l'un dans l'autre et par la plaque support 30.

A titre de variante complémentaire, il est évidemment possible d'avoir recours à des bras entraîneurs 20a, 20b qui ne sont pas montés relativement l'un par rapport à l'autre en position de chevauchement, le verrouillage étant obtenu à l'aide d'une soupape de verrouillage 10 associée à chacun des bras entraîneurs 20a, 20b.

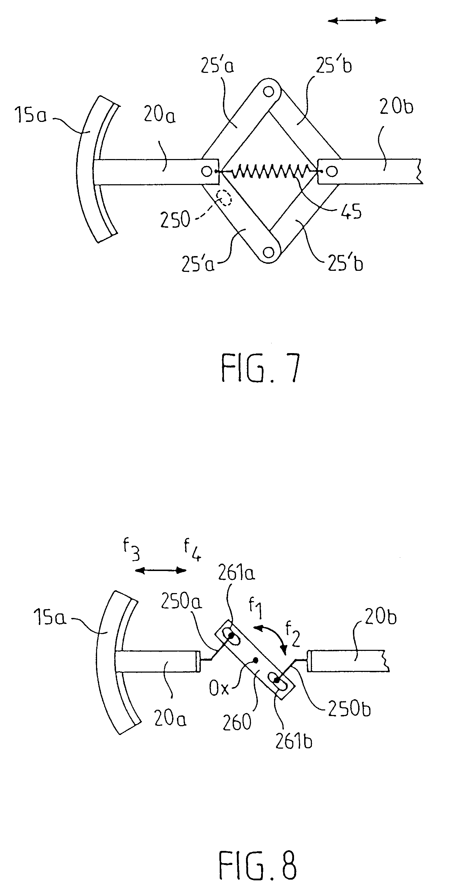

Selon une autre variante de réalisation (figure 7), les éléments entraîneurs sont formés par chaque bras entraîneur 20a, 20b qui se prolongent à l'extrémité opposée à la mâchoire 15a, 15b par deux biellettes, formant deux paires 25'a, 25'b montées mobiles à rotation sur le bras associé par un même axe. Les paires de biellettes 25'a, 25'b sont articulées entre elles pour former un parallélogramme déformable, relié au moyen de commande 50. Les mâchoires 15a, 15b sont rappelées l'une vers l'autre de manière élastique par un ressort 45. La rétractation ou l'extension du parallélogramme commande le déplacement radial des mâchoires 15a, 15b. Selon cette variante, il est possible de ne prévoir qu'une seule soupape de verrouillage 10 associée à une seule lumière de verrouillage 250, ménagée sur un élément entraîneur par exemple sur l'un des bras entraîneurs 20a, 20b, et/ou indifféremment dans l'une des biellettes de chaque paire 25'a, 25'b. Chaque biellette peut néanmoins comporter une lumière de verrouillage 250 et être associée à une soupape de verrouillage 10. Comme dans les autres variantes, les lumières de verrouillage 250 peuvent aussi être ménagées dans la partie centrale de chaque bras 20a, 20b, qui peuvent aussi se superposer au moins en partie en position de verrouillage.

Selon un autre mode de réalisation, montré à la figure 8, les éléments entraîneurs sont formés par les bras entraîneurs 20a, 20b, reliés par l'intermédiaire de barrettes d'actionnement 250a, 250b par exemple coudées, à une barrette centrale 260 commune, montée mobile à rotation sur le couvercle, de préférence selon l'axe de révolution Ox du récipient. La barrette centrale 260 est reliée au moyen de commande 50, de façon à pouvoir être mise en rotation selon les flèches f1, f2, autour de l'axe Ox pour commander le déplacement radial f3, f4 des bras entraîneurs 20a, 20b. A cette fin les barrettes d'actionnement 250a, 250b, qui prolongent chaque bras entraîneur associé 20a, 20b, coulissent dans des orifices respectivement 261a, 261b, formant glissières ménagées dans chaque extrémité de la barrette centrale 260. Selon cette réalisation, les bras entraîneurs 20a, 20b sont également susceptibles de se superposer au moins en partie en position de verrouillage.

## Revendications

1. Dispositif de verrouillage/déverrouillage d'un couvercle (1) sur une cuve (2) pour former un récipient de cuisson sous pression comportant:
- au moins deux mâchoires (15a, 15b) montées radialement mobiles en opposition sur le couvercle (1), entre une position de verrouillage du couvercle (1) sur la cuve (2) et une position de déverrouillage,
- un moyen de commande (50) du mouvement des mâchoires (15a, 15b) de façon à leur faire assurer l'une ou l'autre de leur position de verrouillage ou déverrouillage,
- des éléments entraîneurs (20a, 20b) reliés à chaque mâchoire (15a, 15b), formés par des bras entraîneurs solidaires de chaque mâchoire (15a, 15b) au moins, l'un des bras (20a, 20b) étant pourvu d'une lumière de verrouillage (25a, 25b, 250),
- au moins une soupape de verrouillage (10) montée sur le couvercle (1) et apte à occuper sous l'effet de la pression régnant dans le récipient, une position haute et une position basse, la ou les soupapes (10) et la ou les lumières (25a, 25b, 250) étant disposées relativement pour qu'en position de verrouillage des mâchoires (15a, 15b), la ou les soupapes (10), puisse(nt) engager la ou les lumières (25a, 25b, 250) en position haute pour verrouiller les mâchoires (15a, 15b) en position de verrouillage caractérisé en ce qu'il comporte une soupape de verrouillage (10) associée à deux bras entraîneurs (20a, 20b), susceptibles d'être superposés au moins en position de verrouillage des mâchoires et comportant chacun une lumière de verrouillage (25a, 25b) disposées pour coïncider en position de verrouillage.

2. Dispositif selon la revendication 1 caractérisé en ce que les bras entraîneurs (20a, 20b) sont guidés radialement, par exemple autoguidés l'un dans l'autre par coulissement.

3. Dispositif selon la revendication 1 ou 2 caractérisé en ce que les bras entraîneurs (20a, 20b) sont pourvus à chacune de leur extrémité d'une paire de biellettes (25'a, 25'b) mobiles et articulées entre elles pour former un parallélogramme déformable relié au moyen de commande (50).

4. Dispositif selon la revendication 3 caractérisé en ce qu'il comporte une seule lumière de verrouillage (250) ménagée dans l'une des biellettes.

5. Dispositif selon la revendication 1 ou 2 caractérisé en ce que les bras entraîneurs (20a, 20b) sont reliés entre eux par une barrette centrale (260), montée mobile à rotation sur le couvercle (1), et reliée au moyen de commande (50).

6. Dispositif selon la revendication 5 caractérisé en ce que la barrette centrale (260) est mobile à rotation selon l'axe de révolution (Ox) du récipient et est pourvue de deux orifices (261a, 261b) formant glissières dans lesquels coulissent des barrettes d'actionnement (250a, 250b) prolongeant chaque bras entraîneurs (20a, 20b), lorsque la barrette centrale (260) est mise en rotation pour commander le déplacement radial des bras entraîneurs (20a, 20b).

7. Dispositif selon l'une des revendications 1 à 6 caractérisé en ce qu'il comporte des moyens de guidage du mouvement radial des bras entraîneurs (20a, 20b), lesdits moyens étant solidaires du couvercle (1).

8. Dispositif selon la revendication 7 caractérisé en ce que les moyens de guidage sont formés par une pièce support (30) enserrant les bras entraîneurs (20a, 20b).

9. Dispositif selon la revendication 8 caractérisé en ce que la pièce support (30) recouvre les bras entraîneurs (20a, 20b).

10. Dispositif selon la revendication 8 ou 9 caractérisé en ce que les moyens de guidage sont formés d'une plaque de section transversale en U, enserrant et supportant les bras entraîneurs (20a, 20b).

11. Dispositif selon l'une des revendications 1 à 10 caractérisé en ce que les bras entraîneurs (20a, 20b) sont formés d'un bras femelle (20b) et d'un bras mâle (20a) lequel coulisse dans le bras femelle, la course relative des bras étant limitée par l'intermédiaire d'une fente (40) ménagée dans un bras, de préférence le bras mâle (20a), et dans laquelle peut se déplacer entre deux positions de butée, correspondant aux positions fixes de verrouillage et déverrouillage, un ergot (41) solidaire de l'autre bras, de préférence le bras femelle (20b).

12. Dispositif selon la revendication 11 caractérisé en ce que la course relative des bras entraîneurs (20a, 20b) est limitée par deux ouvertures (40a, 40b) ménagées dans la plaque support (30) et destinées au passage respectivement de l'ergot (41) et d'un ergot (41b) solidaire du bras femelle (20b).

13. Dispositif selon l'une des revendications 1 à 12 caractérisé en ce que les bras entraîneurs (20a, 20b) sont ramenés en permanence en position de verrouillage par un moyen de rappel élastique (45).

14. Dispositif selon la revendication 13 caractérisé en ce que le moyen de rappel élastique (45) est un ressort interposé entre chacun des bras entraîneurs (20a, 20b).

15. Dispositif selon l'une des revendications 1 à 14 comportant un dispositif de commande de l'ouverture et de la fermeture de mâchoires (15a, 15b) caractérisé en ce qu'il comporte un organe de commande (56) monté mobile selon une direction sensiblement radiale sur le couvercle (1) et selon une course déterminée, ledit organe (56) étant amené, lors de son déplacement, à engager les bras entraîneurs (20a, 20b) de façon à commander leur déplacement radial.

16. Dispositif selon la revendication 15 caractérisé en ce que l'organe de commande (56) assure le déplacement des bras entraîneurs (20a, 20b) de manière active dans le sens radial externe et dans le sens radial interne.

17. Dispositif selon la revendication 15 caractérisé en ce que l'organe de commande (56) assure le déplacement des bras entraîneurs (20a, 20b) de manière active dans le sens radial externe, ledit organe de commande (56) étant couplé cinématiquement avec un bouton de commande (52) monté mobile sur le couvercle (1) selon une direction sensiblement axiale apte à commander le déplacement des bras entraîneurs (20a, 20b) dans le sens radial interne.

18. Dispositif selon la revendication 17 caractérisé en ce que l'organe de commande (56) comporte des moyens de blocage (60) des bras entraîneurs (20a, 20b) en position de déverrouillage, le bouton de commande (52) comportant des moyens de relâchement (53, 54) pour commander le désarmement des moyens de blocage (60).

19. Dispositif selon l'une des revendications 15 à 18 caractérisé en ce que l'organe de commande est un poussoir (56) apte à être commandé manuellement.

20. Dispositif selon la revendication 19 caractérisé en ce que le poussoir (56) engage activement les bras entraîneurs (20a, 20b) par l'intermédiaire d'une zone triangulaire (58) pour assurer l'écartement des bras entraîneurs (20a, 20b).

21. Dispositif selon la revendication 20 caractérisé en ce que les moyens de blocage (60) sont formés par des évidements (60) ménagés dans la zone triangulaire (58) pour coopérer avec des ergots (41, 41 b) solidaires des bras entraîneurs (20a, 20b).

22. Dispositif selon la revendication 17 ou 18 caractérisé en ce que le bouton de commande (52) est mobile axialement de manière active par enfoncement.

23. Dispositif selon l'une des revendications 18 à 22 caractérisé en ce que les moyens de relâchement (53, 54) comprennent un doigt d'actionnement (53) apte à engager le poussoir (56) lors de l'enfoncement axial du bouton de commande (52).

24. Dispositif selon l'une des revendications 17 à 23 caractérisé en ce que l'organe de commande (56) et le bouton de commande (52) sont montés sur le couvercle (1) en position centrale pour former son ensemble de préhension.

## Claims

1. A device for locking and unlocking a lid (1) on a bowl (2) for forming a receptacle for cooking under pressure, the device including:
at least two jaws (15a, 15b) mounted on the lid (1) to move in opposite radial directions between a locking position in which the lid (1) is locked on the bowl (2) and an unlocking position;
control means (50) for controlling the movement of the jaws (15a, 15b) so as to cause them to take up one or other of their locking and unlocking positions;
driving elements (20a, 20b) connected to respective ones of the jaws (15a, 15b), and formed by driving arms secured to respective ones of the jaws (15a, 15b), at least one of the arms (20a, 20b) being provided with a locking orifice (25a, 25b, 250); and
at least one locking valve (10) mounted on the lid (1) and suitable for taking up a high position and a low position under the effect of the pressure inside the receptacle, the valve(s) (10) and the orifice(s) (25a, 25b, 250) being relatively disposed so that, when the jaws (15a, 15b) are in the locking position, the valve(s) (10) can engage the orifice(s) (25a, 25b, 250) in the high position so as to lock the jaws (15a, 15b) in the locking position;
said device being characterized in that it includes a locking valve (10) associated with two driving arms (20a, 20b) that are suitable for being mutually superposed at least when the jaws are in the locking position, each of which arms is provided with a locking orifice (25a, 25b), the locking orifices being disposed so that they coincide with each other in the locking position.

2. A device according to claim 1, characterized in that the driving arms (20a, 20b) are guided radially, e.g. they are self-guided by sliding one inside the other.

3. A device according to claim 1 or 2, characterized in that each of the driving arms (20a, 20b) is provided with a pair of links (25'a, 25'b) at a respective one of its ends, the links being movably mounted and hinged together so as to form a deformable parallelogram connected to the control means (50).

4. A device according to claim 3, characterized in that it includes a single locking orifice (250) provided in one of the links.

5. A device according to claim 1 or 2, characterized in that the driving arms (20a, 20b) are connected together via a central strip (260) mounted to rotate on the lid (1), and connected to the control means (50).

6. A device according to claim 5, characterized in that the central strip (260) is mounted to rotate about the axis of circular symmetry (Ox) of the receptacle and is provided with two orifices (261a, 261b) forming slideways receiving actuating strips (250a, 250b) extending respective ones of the driving arms (20a, 20b), the actuating strips sliding in the slideways when the central strip (260) is rotated so as to cause the driving arms (20a, 20b) to be displaced radially.

7. A device according to any one of claims 1 to 6, characterized in that it includes guide means for guiding the radial movement of the driving arms (20a, 20b), said means being secured to the lid (1).

8. A device according to claim 7, characterized in that the guide means are formed by a support piece (30) encompassing the driving arms (20a, 20b).

9. A device according to claim 8, characterized in that the support piece (30) covers the driving arms (20a, 20b).

10. A device according to claim 8 or 9, characterized in that the guide means are formed of a channel section piece encompassing and supporting the driving arms (20a, 20b).

11. A device according to any one of claims 1 to 10, characterized in that the driving arms (20a, 20b) are formed by a female arm (20b) and by a male arm (20a) which is mounted to slide in the female arm, the relative stroke of the arms being delimited by a slot (40) provided in one of the arms, preferably the male arm (20a), in which slot a lug (41) integral with the other arm, preferably the female arm (20b) can be displaced between two abutment positions corresponding respectively to the set locking and unlocking positions.

12. A device according to claim 11, characterized in that the relative stroke of the driving arms (20a, 20b) is delimited by two openings (40a, 40b) provided in the support plate (30) and serving to receive said lug (41) and another lug (41b) integral with the female arm (20b).

13. A device according to claim 1 to 12, characterized in that the driving arms (20a, 20b) are permanently urged towards the locking position by resilient return means (45).

14. A device according to claim 13, characterized in that the resilient return means (45) are constituted by a spring interposed between the driving arms (20a, 20b).

15. A device according to any one of claims 1 to 14, including a device for controlling opening and closing of the jaws (15a, 15b), characterized in that it includes a control member (56) mounted on the lid (1) to move substantially radially and over a determined stroke, said member (56) engaging the driving arms (20a, 20b) on being displaced so as to cause said driving arms to be displaced radially.

16. A device according to claim 15, characterized in that the control member (56) actively causes the driving arms (20a, 20b) to be displaced radially both outwards and inwards.

17. A device according to claim 15, characterized in that the control member (56) actively causes the driving arms (20a, 20b) to be displaced radially outwards, said control member (56) being drivingly coupled to a control button (52) mounted on the cover (1) to move substantially axially, and suitable for causing the driving arms (20a, 20b) to be displaced radially inwards.

18. A device according to claim 17, characterized in that the control member (56) includes securing means (60) for securing the driving arms (20a, 20b) in the unlocking position, the control button (52) including releasing means (53, 54) for causing the securing means (60) to be inactivated.

19. A device according to any one of claims 15 to 18, characterized in that the control member is a pusher (56) suitable for being controlled manually.

20. A device according to claim 19, characterized in that the pusher (56) actively engages the driving arms (20a, 20b) via a triangular zone (58) to move the driving arms (20a, 20b) apart.

21. A device according to claim 20, characterized in that the securing means (60) are formed by recesses (60) provided in the triangular zone (58) for co-operating with the lugs (41, 41b) integral with the driving arms (20a, 20b).

22. A device according to claim 17 or 18, characterized in that the control button (52) is mounted to move axially in active manner by being pushed.

23. A device according to any one of claims 18 to 22, characterized in that the releasing means (53, 54) include an actuating finger (53) suitable for engaging the pusher (56) on axially pushing the control button (52).

24. A device according to any one of claims 17 to 23, characterized in that the control member (56) and the control button (52) are mounted on the lid (1) in a central position so as to form an assembly for grasping the lid.

## Patentansprüche

1. Vorrichtung zum Verriegeln/Entriegeln eines Deckels (1) auf einem Gefäß (2), um einen Druckkochbehälter zu bilden, mit:
- wenigstens zwei Klemmbacken (15a, 15b), die einander gegenüberliegend an dem Deckel (1) zwischen einer Position des Verriegelns des Deckels (1) an dem Gefäß (2) und einer entriegelten Position radial bewegbar angebracht sind,
- einem Steuermittel (50) für ein Steuern der Bewegung der Klemmbacken (15a, 15b) derart, daß diese entweder ihre Verriegelungsposition oder ihre entriegelte Position einnehmen,
- Mitnehmerelementen (20a, 20b), die mit jeweils einer Klemmbacke (15a, 15b) verbunden und durch Mitnehmerarme gebildet sind, die jeweils mindestens mit einer Klemmbacke (15a, 15b) verbunden sind, wobei einer der Mitnehmerarme (20a, 20b) mit einer Verriegelungsöffnung (25a, 25b, 250) versehen ist,
- wenigstens einem Ventilstopfen (10), der an dem Deckel (1) angebracht ist und unter der Wirkung des in dem Behälter wirkenden Drucks eine obere Position und eine untere Position einnehmen kann, wobei der oder die Ventilstopfen (10) und die Öffnung bzw. Öffnungen (25a, 25b, 250) relativ zueinander so angeordnet sind, daß in der Verriegelungsposition der Klemmbacken (15a, 15b) der bzw. die Ventilstopfen (10) in das Loch bzw. die Löcher (25a, 25b, 250) in der oberen Position eintreten kann bzw. können, um die Klemmbacken (15a, 15b) in der Verriegelungsposition zu verriegeln, dadurch gekennzeichnet, daß ein Ventilstopfen (10) vorgesehen ist, der den beiden Mitnehmerarmen (20a, 20b) zugeordnet ist, die wenigstens in der Verriegelungsposition der Klemmbacken übereinanderliegend angeordnet sind und jeweils eine Verriegelungsöffnung (25a, 25b) enthalten, die so angeordnet sind, daß sie in der Verriegelungsposition übereinstimmen.

2. Vorrichtung nach Anspruch 1, dadurch gekennzeichnet, daß die Mitnehmerarme (20a, 20b) radial geführt sind, insbesondere selbsttätig ineinander mittels einer Verschiebung.

3. Vorrichtung nach Anspruch 1 oder 2, dadurch gekennzeichnet, daß die Mitnehmerarme (20a, 20b) jeweils an einem Ende mit einem Paar von bewegbaren Schwingarmen (25'a, 25'b) versehen sind, die untereinander bewegbar und aneinander angelenkt sind, so daß ein mit dem Steuermittel (50) verbundenes, verformbares Parallelogramm gebildet ist.

4. Vorrichtung nach Anspruch 3, dadurch gekennzeichnet, daß sie eine einzige Verriegelungsöffnung (250) aufweist, die in einem der Schwingarme ausgebildet ist.

5. Vorrichtung nach Anspruch 1 oder 2, dadurch gekennzeichnet, daß die Mitnehmerarme (20a, 20b) miteinander durch einen zentralen Stab (260) verbunden sind, der drehbar an dem Deckel (1) angebracht und mit dem Steuermittel (50) verbunden ist.

6. Vorrichtung nach Anspruch 5, dadurch gekennzeichnet, daß der zentrale Stab (260) um die Rotationsachse (Ox) des Behälters drehbar und mit zwei Durchbrüchen (261a, 261b) versehen ist, welche Schiebeführungen bilden, in denen Betätigungsstäbe (250a, 250b), welche jeweils einen Mitnehmerarm (20a, 20b) verlängern, gleiten, wenn der zentrale Stab (260) für das Steuern der radialen Verstellung der Mitnehmerarme (20a, 20b) gedreht wird.

7. Vorrichtung nach einem der Ansprüche 1 bis 6, dadurch gekennzeichnet, daß sie Führungsmittel zum Führen der radialen Bewegung der Mitnehmerarme (20a, 20b) enthält, wobei die Führungsmittel fest mit dem Deckel (1) verbunden sind.

8. Vorrichtung nach Anspruch 7, dadurch gekennzeichnet, daß die Führungsmittel durch ein Trägerteil (30) gebildet sind, welches die Mitnehmerarme (20a, 20b) eng umschließt.

9. Vorrichtung nach Anspruch 8, dadurch gekennzeichnet, daß das Trägerteil (30) die Mitnehmerarme (20a, 20b) abdeckt.

10. Vorrichtung nach Anspruch 8 oder 9, dadurch gekennzeichnet, daß die Führungsmittel durch eine Platte mit U-förmigem Querschnitt gebildet sind, welche die Mitnehmerarme (20a, 20b) eng umschließt und trägt.

11. Vorrichtung nach einem der Ansprüche 1 bis 10, dadurch gekennzeichnet, daß die Mitnehmerarme (20a, 20b) durch einen äußeren Arm (20b) und einen inneren Arm (20a) gebildet sind, der in dem äußeren Arm gleitet, wobei der Relativweg der Arme mittels eines Schlitzes begrenzt ist, der in einem Arm, vorzugsweise dem inneren Arm (20a), gebildet ist und in welchem ein fest mit dem anderen Arm, vorzugsweise dem äußeren Arm (20b), verbundener Vorsprung (41) zwischen zwei Anschlagpositionen verstellt werden kann, welche der festen Verriegelungsposition und der festen entriegelten Position entsprechen.

12. Vorrichtung nach Anspruch 11, dadurch gekennzeichnet, daß der Relativweg der Mitnehmerarme (20a, 20b) von zwei Durchbrüchen (40a, 40b) begrenzt ist, die in der Trägerplatte (30) ausgebildet und dafür vorgesehen sind, daß sie der Vorsprung (41) bzw. ein fest mit dem äußeren Arm (20b) verbundener Vorsprung (41b) durchguert.

13. Vorrichtung nach einem der Ansprüche 1 bis 12, dadurch gekennzeichnet, daß die Mitnehmerarme (20a, 20b) permanent von einem elastischen Rückstellmittel (45) in die Verriegelungsposition beaufschlagt sind.

14. Vorrichtung nach Anspruch 13, dadurch gekennzeichnet, daß das elastische Rückstellmittel (45) eine zwischen den Mitnehmerarmen (20a, 20b) angeordnete Feder ist.

15. Vorrichtung nach einem der Ansprüche 1 bis 14, mit einer Vorrichtung zum Steuern des Öffnens und des Schließens von Klemmbacken (15a, 15b), dadurch gekennzeichnet, daß ein Steuerorgan (56) in einer im wesentlichen radialen Richtung und um einen vorbestimmten Weg bewegbar an dem Deckel (1) angebracht ist und bei seiner Bewegung an den Mitnehmerarmen (20a, 20b) deren radiale Verstellung steuernd angreift.

16. Vorrichtung nach Anspruch 15, dadurch gekennzeichnet, daß das Steuerorgan die Verstellung der Mitnehmerarme (20a, 20b) in aktiver Weise in der radialen Richtung nach außen und nach innen gewährleistet.

17. Vorrichtung nach Anspruch 15, dadurch gekennzeichnet, daß das Steuerorgan (56) die Verstellung der Mitnehmerarme (20a, 20b) in aktiver Weise in der radialen Richtung nach außen gewährleistet, wobei das Steuerorgan (56) kinematisch mit einem Steuerknopf (52) gekoppelt ist, der an dem Deckel (1) in einer im wesentlichen axialen Richtung bewegbar angebracht ist und die Verstellung der Mitnehmerarme (20a, 20b) in der radialen Richtung nach innen steuern kann.

18. Vorrichtung nach Anspruch 17, dadurch gekennzeichnet, daß das Steuerorgan (56) Blockiermittel (60) zum Blockieren der Mitnehmerarme (20a, 20b) in der entriegelten Position umfaßt, wobei der Steuerknopf (52) Lösemittel (53, 54) enthält, um das Lösen der Blockiermittel (60) zu steuern.

19. Vorrichtung nach einem der Ansprüche 15 bis 18, dadurch gekennzeichnet, daß das Steuerorgan ein Drücker (56) ist, der manuell betätigt werden kann.

20. Vorrichtung nach Anspruch 19, dadurch gekennzeichnet, daß der Drücker (56) mittels einer dreieckigen Zone (58) aktiv an den Mitnehmerarmen (20a, 20b) angreift, um das Auseinanderbewegen der Mitnehmerarme (20a, 20b) zu gewährleisten.

21. Vorrichtung nach Anspruch 20, dadurch gekennzeichnet, daß die Blockiermittel (60) durch Aussparungen (60) gebildet sind, die in der dreieckigen Zone (58) ausgebildet sind und mit Vorsprüngen (41, 41b) an den Mitnehmerarmen (20a, 20b) zusammenwirken.

22. Vorrichtung nach Anspruch 17 oder 18, dadurch gekennzeichnet, daß der Steuerknopf (52) axial bewegbar ist, so daß er durch Eindrücken aktiv wirkt.

23. Vorrichtung nach einem der Ansprüche 18 bis 22, dadurch gekennzeichnet, daß die Lösemittel (53, 54) einen Betätigungsstift (53) enthalten, der beim axialen Eindrücken des Steuerknopfs (52) an dem Drücker (56) angreifen kann.

24. Vorrichtung nach einem der Ansprüche 17 bis 23, dadurch gekennzeichnet, daß das Steuerorgan (56) und der Steuerknopf (52) an dem Deckel (1) in einer zentralen Position angebracht sind und seine Griffeinheit bilden.
